# EUROPEAN PATENT APPLICATION

(11) **EP 1 492 290 A2**
(43) Date of publication of application: **29.12.2004**
(21) Application number: 04101582.7
(22) Date of filing: 16.04.2004
(51) Int. Cl.: H04L 25/14

(54) **Bit alignment in multichannel data transmission**

(30) Priority: 26.06.2003 EP 03368062
(71) Applicant: International Business Machines Corporation, Armonk, N.Y. 10504 (US)
(72) Inventor: Pereira, David, 91090 Lisses (FR)
(74) Representative: de Pena, Alain

(57) **Abstract**

An alignment circuit (18) is configured to receive a reference clock signal (**ref_clk**) derived from a main clock having a period T and successive sets of 2n data bits that are transmitted in parallel on a data bus (26) wherein said data bits are aligned with respect to said reference clock signal but misaligned with respect to each other. It first comprises a plurality of n aligners. Each aligner (49-i) is coupled to said reference clock and a pair of said data bits, referred to as primary bits, one data bit (**bit_tdat(i)**) having the rank (i) in a determined set and the other being the corresponding data bit (**bit_tdat(i+n)**) having the rank (i+n) in the set. Each aligner comprises first, second and third shifting means (51-i,52-i,53-i) for shifting said primary data bits to respectively generate respective data bits delayed of one, two and two and half cycles and a multiplexor (50-i) receiving said primary and delayed data bits under the control of three control signals of a first type (**recal(i), realign0(i)** and **realignl(i)**) to generate a pair of aligned data bits (**tdat_desk(i)** & **tdat_desk(i+n)**). It further comprises a control block (58) coupled to said primary signals and to all pairs of said aligned data bits (**tdat_desk(0)** to **tdat_desk(2n-1)** determines the end of the alignment operation and generates a control signal of a second type (**enable_test**). As a result, said alignment circuit generates 2n data bits (**tdat_desk(0)** to **tdat_desk(2n-1)**) that are aligned with said main clock and with each other on a data bus (57).

## Description

### FIELD OF THE INVENTION

The present invention relates to high speed networking and more particularly to an improved circuit for bit skew suppression/bit alignment in high speed multichannel data transmission.

### CO-PENDING PATENT APPLICATION

Cross reference is hereby made to EP patent application N° .... , entitled "Improved circuit for bit skew suppressio in high speed multichannel data transmission" which was filed on even date herewith.

### BACKGROUND AND OBJECTS OF THE INVENTION

At high frequency transmission rate, when bits are transferred in parallel on the same bus, for instance at the interface between a telecom chip and a network processor, a misalignment of the bits often occurs. This misalignment, commonly referred to as the skew, is mainly due to transmission path differences, but can result of other factors such as impedance mismatches or delays in the clock signals as well. As a matter of fact, when bits are transferred in parallel at high speed, they go through different paths, and therefore have different arrival times.

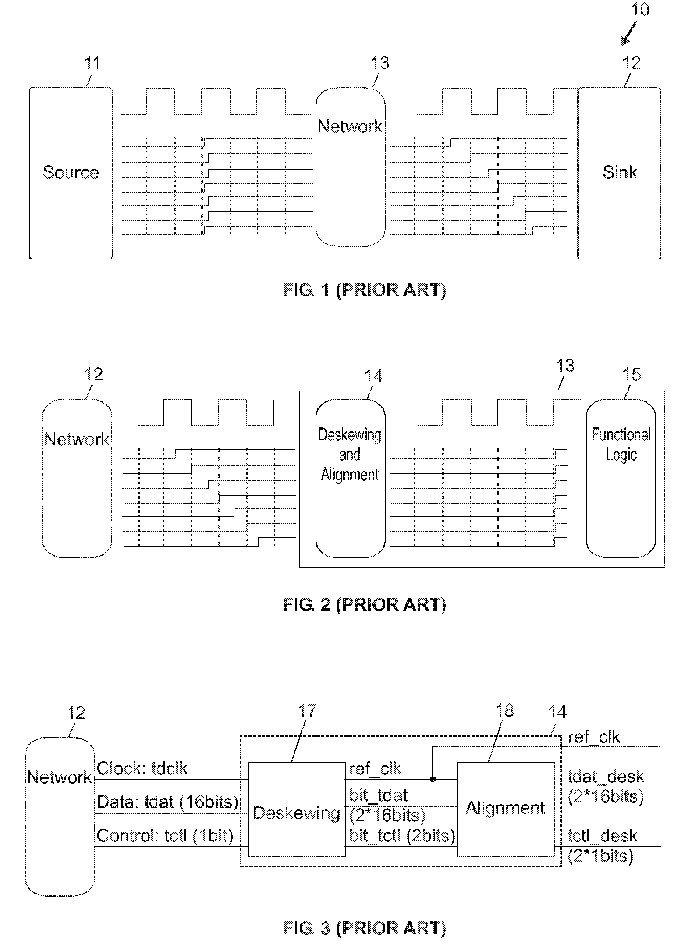

FIG. 1 shows a telecommunication system 10 comprised of a source (emitter) 11 and a sink (receiver) 12 that exchange bits via a network 13, typically a bus comprised of a plurality of transmission lines, to illustrate the skew that occur on a set of bits transmitted in parallel vis a vis a clock signal. As apparent in FIG. 1, the slight misalignment that can be noticed at the output of the source 11 is significantly increased after the network 13 before it is applied to the sink 12. To be able to retrieve the bits in a correct order, a deskewing/alignment mechanism must be thus implemented as shown in FIG. 2.

Now turning to FIG. 2, a deskewing and alignment block 14 is placed inside the sink 13 in a front end position to achieve this result before the aligned bits are processed in the functional logic block 15 as standard. As a result, in a telecom IC chip, the deskewing/alignment function is performed between the input/output terminals (I/Os) and the functional logic of the chip.

For instance, the Frame Based ATM level 4 or the SPI4 phase 2 protocols recommended respectively by the ATM and OIF forums, edict that deskewing is only mandatory if the transmission lines (or links) are running at more than 350 MHz, but not for the lower frequencies (the standard transmission range starts at 310 MHz). When the bits are received in accordance with these protocols, a training sequence is sent inband periodically. The 20-word training pattern consists of 10 repeated training control words followed by 10 repeated training data words, wherein the training data word "1111000000000000" is orthogonal to the training control word "0000111111111111". It is applied to a 17 bit-width data bus, 1 control bit being associated to each set of 16 bits.

In this context, the role of the deskewing/alignment block 14 is to suppress the skew and properly realign the data and control bits on the main clock. To that end, it analyses the border between the training control words and the training data words to determine the delay which must be added to each transmission line of the data bus to realign the bits. This delay defined on training patterns is then applied to inband data bits. As illustrated in FIG. 3 which schematically shows the block diagram architecture of the deskewing and alignment block 14 of FIG. 2, the deskewing/alignment function is usually performed in two separate blocks: the deskewing block and the alignment block, respectively referenced 17 and 18. The received main clock signal **tdclk**, the 16 data bits **tdat** and the single control bit **tctl** are applied to the deskewing block 17 as inputs. Note that the data and control bits are applied via a bus having a width of 17 bits on each edge of the main clock (double edge clock). In turn, the deskewing block 17 generates an internal reference clock signal **(ref_clk),** 2*16 data bits **(bit_tdat)** and 2*1 control bits **(bit_tctl)** that are sent to the alignment block 18. Said data and control bits are aligned with said reference clock but misaligned with respect to each other. Finally, the alignment block 18 processes these bits and generates 2*16 dat a bits **(tdat_desk)** and 2*1 control bits **(tctl_desk)** that are still aligned with said main clock and are now also aligned with each other.

After reset, the source continuously sends training patterns until enough valid parity values are received. Each control word and especially each training control word includes a parity field which is a diagonal interleaved parity computed on all the data which have been received after the previous control word. The parity values will not be correct until the deskewing is properly done.

It is therefore desirable to have a deskewing/alignment block combination which renders the functional logic block totally skew insensitive on the totality of said standard transmission range. It is also desirable to avoid the need of switching between two telecom systems or operating modes depending on whether the transmission frequency is lower or higher than 350 MHz. It is further desirable to have a deskewing/alignment block combination that performs an automatic discrimination between the data sequences and the training sequences that are periodically sent inband. Finally, it is still further desirable that there is no interaction between the deskewing/alignment block combination and the functional logic block.

### SUMMARY OF THE INVENTION

According to the present invention there is described an improved alignment circuit configured to receive a reference clock signal derived from a main clock having a period T and successive sets of 2n data bits, that are transmitted in parallel on a data bus wherein said data bits are aligned with respect to said reference clock signal but misaligned with respect to each other; said alignment circuit comprising:
a plurality of n aligners, each aligner being coupled to said reference clock and a pair of said data bits, referred to as primary bits, one data bit having the rank (i) in a determined set and the other being the corresponding data bit having the rank (i + n) in the set; each aligner comprising:
   - first shifting means for shifting said primary data bits to generate respective first and second data bits delayed of one cycle therefrom;
   - second shifting means for shifting said first and second data bits to generate respective third and fourth data bits delayed of one cycle therefrom;
   - third shifting means for shifting said fourth data bit to generate a fifth data bit delayed of one half-cycle therefrom;
   - multiplexing means receiving said primary and delayed data bits under the control of three control signals of a first type to generate a pair of aligned data bits;
so that said plurality of aligners generates 2n data bits that are aligned with said main clock and with each other on a data bus; and,
a control block coupled to said primary signals and to all pairs of aligned data bits that determines the end of the alignment operation and generates a control signal of a second type to that end.

The novel features believed to be characteristic of this invention are set forth in the appended claims. The invention itself, however, as well as other objects and advantages thereof, may be best understood by reference to the following detailed description of an illustrated preferred embodiment to be read in conjunction with the accompanying drawings.

### BRIEF DESCRIPTION OF THE DRAWINGS

FIG. 1 shows the schematic diagram of a telecommunications system comprised of a source and a sink that exchange data bits via a network, typically a parallel data bus to illustrate the skew that occurs on the transmitted data bits when they are received by the sink with respects to the received clock signal.
FIG. 2 shows a deskewing and alignment block placed inside the sink in a front end position to align the received data bits with the received clock signal before processing in the functional logic part of a telecom chip.
FIG. 3 schematically shows a typical implementation of the deskewing and alignment block of FIG. 2 which is usually comprised of two separate blocks, a deskewing block and an alignment block.
FIG. 4 schematically shows the block diagram architecture of the deskewing block of the present invention.
FIG. 5 shows a first implementation of the multiphase clock generator of FIG. 4 using a standard phase locked loop (PLL) circuit designed to generate 16 phases.
FIG. 6 shows that there is no oversampling when the sampling is performed with the 16-phase PLL circuit depicted in FIG. 5.
FIG. 7 shows another possible implementation of the multiphase clock generator of FIG. 4 using a standard controlled delay line loop (DLL) circuit constructed with a set of differential buffers and inverters.
FIG. 8 shows that there is some oversampling when the sampling is performed with the controlled DLL circuit depicted in FIG. 7.
FIG. 9 is a flowchart describing the global operation of the control logic block shown in FIG. 4.
FIG. 10 details the block diagram architecture of a preferred implementation of the sampler shown in FIG. 4.
FIG. 11 details the block diagram architecture of a preferred implementation of the phase selector shown in FIG. 4.
FIG. 12 schematically shows the block diagram architecture of the alignment block of the present invention.
FIG. 13 shows the generation of the three signals **recal, realign (0)** and **realign (1)** of FIG. 12 depending upon the value of the **enable_test, bit_tdatn(i)** and **bit_tdatp(i)** signals.
FIG. 14A shows the waveforms of the training patterns (control and data bits, main clock signal) that are received by the deskewing block with skew (inter and intra cycle).
FIG. 14B shows the waveforms of the control and data bits after processing in the deskewing block to illustrate the realignment of these control/data bits with a reference clock signal **ref_clk** that is internally generated.
FIG. 14C shows the waveforms of the control and data bits that are obtained after processing in the alignment block to illustrate that they are now aligned on the original main clock signal **tdclk**.

### DESCRIPTION OF A PREFERRED EMBODIMENT

### Description of the deskewing block 17 overall architecture

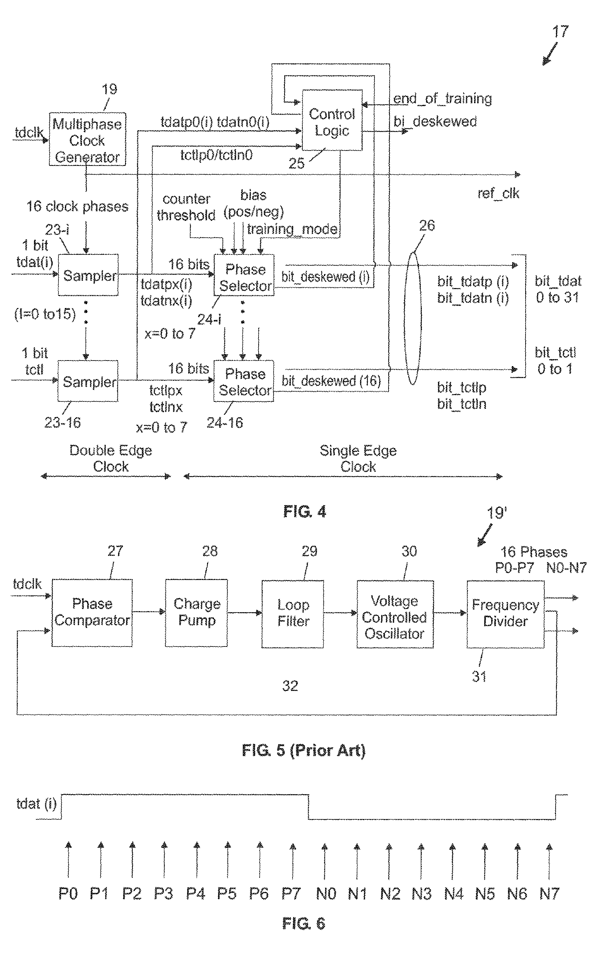

The block diagram architecture of the deskewing block 17 in accordance with the present invention is shown in FIG. 4. Now turning to FIG. 4, a multiphase clock generator 19 is required to generate an adequate number N, e.g. 16, of clock phases from the main clock labeled **tdclk**. Let us assume at this stage of the description, that these 16 clock phases are referenced **P0** to **P7** and **N0** to **N7** to distinguish between the positive and the negative clock edges as it will be explained in more details in due course. Each data bit, **tdat(0)** to **tdat(15)** is applied to a one-bit sampler referenced 23-0 to 23-15 while the control bit **tctl** is applied to one-bit bit sampler 23-16. The 16 clock phases generated by clock generator 19 are applied to all samplers 23-0 to 23-15 to be used in the overall sampling process. In addition, the sampler is used to perform the clock domain change from the sampling clock to the phase selected as the reference clock, e.g. **P0,** referred to as **ref_clk** hereinbelow. As apparent in FIG. 4, data bit **tdat(i),** wherein i varies from 0 to 15, is applied to bit sampler 23-i and the control bit **tctl** is applied to sampler 23-16. The signals resulting from the sampling of data bit **tdat(i)/**control bit **tctl** are labeled **tdatpx(i)** and **tdatnx(i)/tctlpx and tctlnx,** wherein x varies from 0 to 7, depending on whether they are obtained with a positive or a negative clock edge (double edge clock). These signals **tdatpx(i)** and **tdatnx(i)** are applied to one-bit phase selector 24-i. The sampled signals **tctlpx** and **tctlnx** are applied to one-bit phase selector 24-16. Different control signals are applied to phase selectors 24-0 to 24-16. They include the **counter_threshold**, the **bias** (for positive and negative phases) and the **training_mode** signals. The generation and the role of these signals will be explained later on in due course. The phase selector 24-i generates the **bit_deskewed(i)** and the two selected data bit signals **bit_tdatp(i)** and **bit_tdatn(i)** signals. The **bit_deskewed (i)** signal is set high to indicate that phase selector 24-i has determined which phases were the best for sampling the data bits. The same reasoning applies to the control bits, phase selector 24-16 generates the **bit_deskewed (16)** and the selected control **bit_tctlp** and **bit_tcltn** signals. The sampled signals **tdatp0(i), tdatn0(i), tctlp0** and **tctln0** and **tctln7** on the one hand and the **bit_deskewed (i)** signals, wherein i still varies from 0 to 16 on the other hand, are applied to a control logic block 25. This block which also receives the **end_of_training** signal , generates the **training_mode** signal mentioned above and the **bit_deskewed** signal. The latter signal indicates that the operation of determining the best phase in all phase selectors 24-0 to 24-16 has been completed. The sampled signals and the selected signals are made available on a double width data bus 26 that thus transports 32 data bits, referred to as the **bit_tdat(0)** to **bit_tdat(31) ,** (bit_tdat 0 to 31 in short) and 2 control bits referred to as **bit_tctl(0)** and **bit_tctl(1) ,** (bit_tctl 0 to 1 in short), that will be applied to the alignment block 18 shown in FIG. 3. In summary, the main role of the deskewing block 17 is to find the best phase to sample each of the incoming bits and to output 2 sets of data/control bits in the common clock domain **(ref_clk).** To that end, the samplers 23- are used to sample the bits with different clock phases and the selectors 24- choose the best phase for each bit. On the other hand, the control logic block 25 detects the training sequences and properly drives the phase selectors. In essence, the deskewing block 17 schematically shown in FIG. 4, thus comprises a multiphase clock generator, a control logic block and a plurality of samplers and phase selectors. These specific circuits will be now described in more details.

### 1. Description of the multiphase clock generator 19

Multiphase clock generator 19 can be implemented either with a controlled delay line loop circuit (DLL) or a phase locked loop circuit (PLL). The latter circuit is more flexible in that it can operate with frequencies as low as 100 MHz. If implemented with a DLL, sixteen different clock phases with a fixed delay between each other are necessary. If implemented with a PLL, sixteen different clock phases equally spaced in the clock period are necessary. In the present implementations, the deskewing mechanism can be used with a double edge clock running between 311 and 400 Mbits/s, which is equivalent to a 622 Mbits/s to 800 Mbits/s range.

FIG. 5 shows a preferred implementation of the multiphase clock generator 19 with a PLL circuit referenced 19'. The received main clock signal **tdclk** and the loop signal output by the PLL circuit 19' are applied to the phase comparator 27, which in turn generates a signal that is supplied to a charge pump 28. The latter outputs a current signal that is fed to a voltage controlled oscillator (VCO) circuit 30 via a loop filter 29. The VCO circuit 30 is coupled to a frequency divider 31 that supplies said loop signal on line 32. The desired 16 phases are available at the output of VCO circuit 30. They are referenced **P0** to **P7** for the clock signals obtained on the rising edge of the main clock, and **N0** to **N7** for those obtained on the falling edge thereof.

As apparent in FIG. 6, if the deskewing mechanism of the present invention is implemented with a 16-phase PLL circuit, there is no oversampling. The spacing between two phases increases if the frequency of the main clock gets lower.

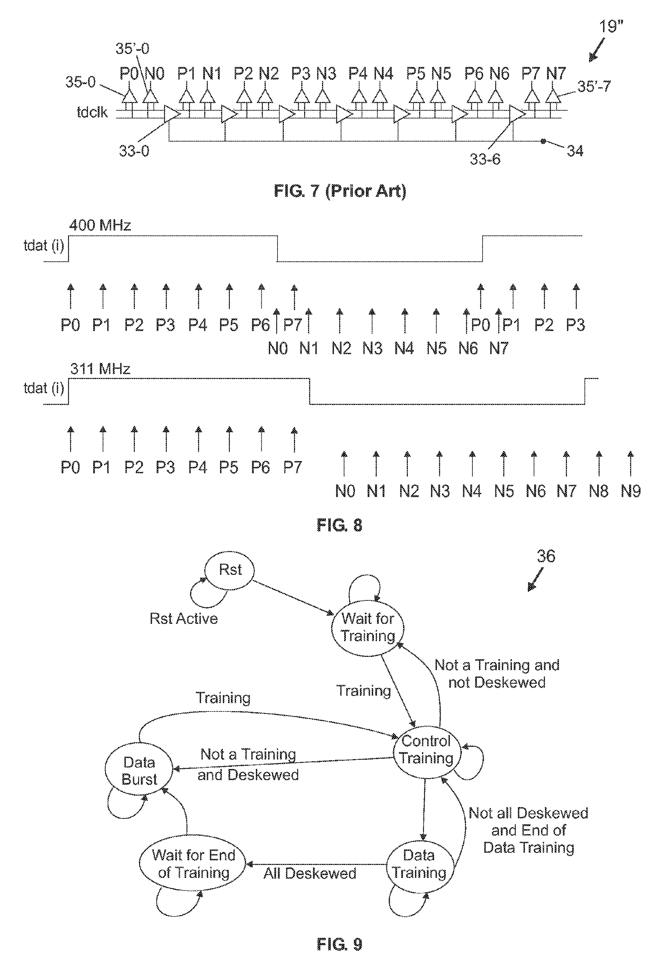

FIG. 7 shows another implementation of the multiphase clock generator 19 with a controlled DLL circuit referenced 19". The latter is organized around a series of seven differential buffers 33-0 to 33-6 connected in series, each having an inverting and a non-inverting output, that operate as the delay elements in the chain. They are controlled by an input bias via line 34. At the inputs of the chain and at the outputs of each differential buffer, a pair of inverters 35-0, 35'-0, ...., 35-7, 35'-7 is placed to deliver the positive and the negative clock phases **P0, N0,** ... , **P7, N7** respectively, from the differential main clock **tdclk,** i.e. the desired 16 clock phases.

The deskewing will run from 311 to 400 MHz but the controlled delay line generates fixed clock phases. As apparent in FIG. 8, this means that there will be oversampling of some data bits.

### 2. Description of the control logic block 25

The main task of the control logic block 25 is to detect the training sequences and properly drive the phase selectors. It consists in a finite state machine (FSM) and some counters and flags, but it will rather be described by its functionalities. These counters and flags include:
- a control training word counter, which counts the number of double control training words;
- a data training word counter, which counts the number of double data training words received;
- a **bit_deskewed** flag which is set high when the deskewing operation has been completed and set low when the reset is active or when a training sequence is going on;
- a **training_ongoing** flag which is set high when training is going on and is set low otherwise; and,
- a **training_mode** flag is comprised of two bits according to the following rules: 00 ==> no training, 01 ==> sub-bit training, 10 ==> latch the selected values, and 11 ==> word training.

FIG. 9 shows the flow chart referenced 36 that schematically describes the control logic block 25 operation through the different states of the FSM.

*Wait_for_training:* the FSM stays in this state as long as the incoming data does not contain a suspected training word (OFFFOFFF) with the control bit **tctl** high. The training control word and training data word counters are reset. The **training_ongoing** and **training_mode** flags are reset, too, respectively at '0' and '00'.

*Control_training:* the training control word counter is enabled while the training data word counter is still reset. It will move to data_training state (see below) if enough training control words are received. If not enough control training words are received, the FSM moves to the wait_for_training state or to the data_burst_state (see below) according to the **bit_deskewed** flag. The **training_ongoing** and **training_mode** flags remain unchanged.

*Data_training:* the training data word counter is enabled while the training control word counter is reset. The FSM stays in this state during 5 cycles. If enough training data words are received, then the **training_ongoing** flag is set to '1' and the **training_mode** flag is set to '01'. When all **bit_deskewed (i)** signals are set to '1', the **bit_deskewed** signal will also go high and the **training_mode** flag will go to '10'. When the **bit_deskewed** signal and the **data_align** signal (see below), are set to '1', the deskewing operation is completed and the FSM moves to the wait_for_end_of_training state. If not completed, the FSM goes back to the control_training state. Otherwise, if not enough training data words have been received during these 5 cycles, it was not a training sequence, thus the FSM moves back to the control_training state.

*Wait_for*_*end*_*of*_*training:* the training control word and training data word counters are reset. The training_ongoing flag is also reset, and it moves to the data_burst state (see below) as soon as the sampled bits, i.e. **tdatpx (i)** , **tdatnx (i)** , **tctlp and tctln** are not a training pattern anymore. The **training_mode** flag is set to '11' and the **end_of_training** signal (see below) is set to '1'.

*Data_burst:* the training control word and training data word counters are reset. The FSM stays in this state as long as the incoming data bits look like a training control word. The **training_mode** flag is set to '00'.

### 3. Description of the sampler 23

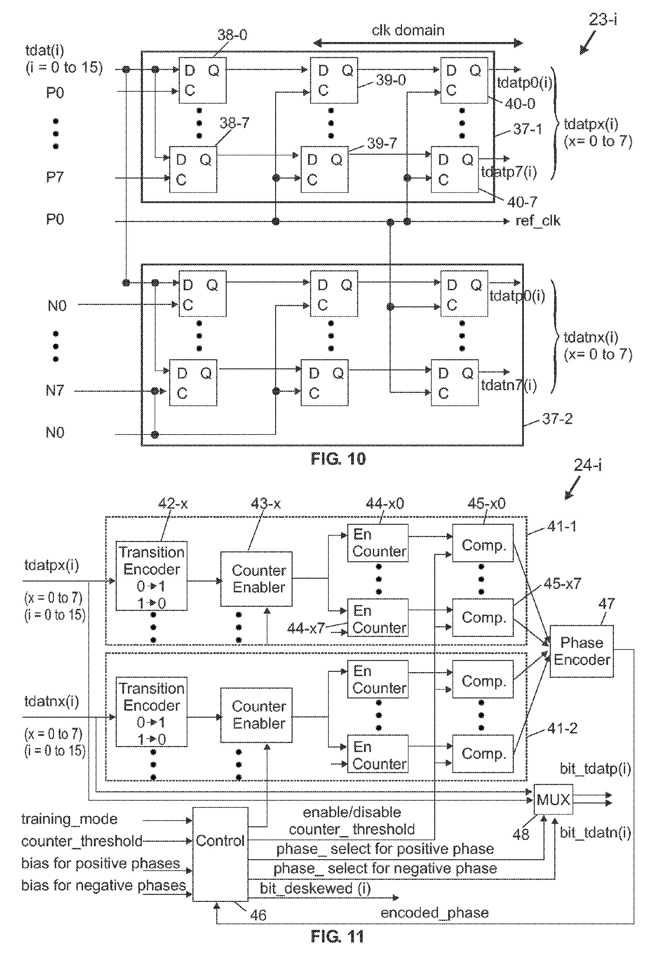

The logic diagram of the one-bit sampler 23-i is schematically shown in FIG. 10. It is used to sample each data bit and the control bit with the 16 clock phases. As apparent in FIG. 10, it is comprised of two identical slices 37-1 and 37-2. The upper slice 37-1 samples the data bit signals **tdat(i)** using the positive clock phases **P0** to **P7 to** gen erate data bits **tdatp0(i)** to **tdatp7(i)** and the lower slice 37-2 samples the data bit **tdat(i)** using the negative clock phases **N0** to **N7** to generate data bits **tdatn0 (i)** to **tdatn7 (i)** . As apparent in FIG. 10, the upper slice 37-1 consists in a battery of three columns of eight latches. For each of the eight latches in the first column (in reality each latch consists in a master/slave latch pair), referenced 38-0 to 38-7, the clock input is driven by a determined clock phase, **P0** to **P7,** respectively and their data input receives the data bit **tdat(i).** Still referring to FIG. 10, the clock phase **P0,** which has been selected as the reference clock **ref_clk,** is applied to the clock input of all the remaining latches. The data bits are transferred from the output of the latches forming the first column to the data input of the second column, referenced 39-0 to 39-7. In turn, the data bits output by the latches forming the second column are applied to the data input of the latches forming the third column, referenced 40-0 to 40-7. Finally, this last set of latches, generates eight signals, **tdatp0(i)** to **tdatp7 (i)** that are the incoming data bits sampled with the positive clock phases. A symmetric construction applies to the lower slice 37-2 with respect to the negative clock phases to generate sampled signals **tdatn0 (i)** to **tdatn7 (i)** . However, in the lower slice, the first and second column of latches are clocked by the phase **N0** while the phase **P0** is clocking the third column of latches. By this mechanism, both the metastability and the clock domain change are taken care of. The same reasoning applies to sampler 23-16 which samples the control bit **tctl** to generate control bits **tctlp0(i)** to **tctclp7(i)** using the positive clock phases **P0** to **P7** in the upper slice and to generate control bits **tctln0(i)** to **tctcln7(i)** using the negative clock phases **N0** to **N7** in the lower slice. Once the sampling is done, the data are moved to the reference clock domain, **ref_clk** is the clock used by the next circuits. The sampled data and control bits are used by the control logic block 25 described above to check if they are training words. In summary, bit sampler 23-i generates two set of data/control bits sampled with the positive and negative clock phases respectively. Once the 16*17 bits are output, the phase selection operation can start in the corresponding phase selector 24-i.

### 4. Description of the one-bit phase selector 24

The logic diagram of the one-bit phase selector 24-i is schematically shown in FIG. 11. The selector 24-i receives sampled data bits **tdatpx(i)** to **tdatnx(i)**, wherein x varies from 0 to 7 and i from 0 to 15, i.e. 16 bits coming from the sampler 23-i. Sometimes the positive and negative phases can be overlapped (see FIG. 8), so that these two sets of data are processed separately. As apparent in FIG. 11, phase selector 24-i is comprised of two identical slices 41-1 and 41-2. In the upper slice 41-1, sampled data bits **tdatpx(i)** are applied to a first battery of eight transition encoders, then to a corresponding battery of eight counter enablers, respectively referenced 42-x and 43-x, wherein x varies from 0 to 7, respectively. The role of a transition encoder is to detect the transitions 0 -> 1 and 1 -> 0 and to encode the received eight bits in four bits as shown in Table 1 or Table 2 below. The binary value that is output corresponds to the address number of one among the eight counters 44-x0 to 44-x7, for instance 0000 designates the address of counter N° 0, i.e. counter 44-x0, that is associated to sampled data bit **tdatp0(i).** To that end, the output of counter enabler 43-x is connected to the enable input of each of said counters while each clock input thereof receives the reference clock **ref_clk.** The output of each counter, e.g. 44-x0, is connected to the first input of a corresponding comparator, e.g. 45-x0 which receives the counter threshold information from a dedicated control block referenced 46. All the outputs of comparators 45-x0 to 45-x7 in slice 41-1 are applied to a phase encoder 47. Likewise, the latter also receives the eight signals resulting from the processing of sampled data bits **tdatnx(i)** in the lower slice 41-2. Phase encoder 47 generates the **encoded_phase** signal that is applied to the control block 46. The **training_mode,** the **counter threshold,** and the **bias** (for positive and negative phases) signals are also applied to the control block 46 as inputs. The role of this control block 46 is to decode the signal representing the **training_mode** flag. Indeed, depending on the value of the **training_mode** flag, the control block 46 will enable/disable the counter enablers 43-via the **enable/disable** signal. Control block 46 generates the **selected_phase** signal that specifies the two selected phases (positive and negative) that are applied to the control input of the multiplexor 48, which receives data bits **tdatpx(i)** and **tdatnx(i),** wherein x varies from 0 to 7, as inputs. In turn, multiplexor 48 generates data bits **bit_tdatp(i)** and **bit_tdatn(i).** Likewise, selector 24-16 (not shown) receives sampled control bits **tctlp** and **tctln** before processing them the same way. Once the signals generated by phase selectors 24-0 to 24-16, i.e. **bit_tdatp(0)** to **bit tdatp(15),**
**bit_tdatn(0)** to **bit_tdatn(15) , bit_tctlp** and **bit_tctln,** are gathered, they form the bus 26 shown in FIG. 4. As apparent in FIG. 4, bus 26 is applied to the alignment block 18 with the reference clock signal **ref_clk.** Considering FIG. 11 again, transition encoders 42-, counter enablers 43-, counters 44-, comparators 45-, the phase encoder 47 and the multiplexor 48 are standard circuits and will not be described further herein.

During the training sequence (**training_mode** flag = 01), the phase selector 24-i looks for a transition 1 -> 0 if the two last bits were 1, or 0 -> 1 when the two last bits were 0. To do so, the transition encoders 42-x are used on each set of 8 bits sampled values in accordance with the conversion scheme depicted in Table 1 or Table 2 below, and the counter enabler 43-x associated therewith enables the correct counter. A counter is dedicated to each of the eight positive and negative clock phases. As apparent in FIG. 11, the counter enabler enables the correct counter with the outputs of the transition encoder and the control block 46. At every clock cycle, all the counters are compared to the **counter_treshold** flag through comparators 45-. The signals output therefrom are used by the phase encoders 47- to compute the **encoded_phase** signal. At that time, the control block 46 stores the **encoded_phase** signal which represents the phase where the transition has occurred the most often. Then, by adding positive and negative **bias** signals, it selects two phases (one positive and one negative) to select the corresponding data bits **tdatpx(i)** with the **phase_select** (for positive phases) signal and **tdatnx(i)** with the **phase_select** (for negative phases) signal at a stable position. As apparent in FIG. 8, if two phases meet the criteria to be chosen in the case there is phase overlapping, the less delayed one is chosen because it is more stable, e.g. **N0** is preferred to **P7.** It also sets high the **bit_deskewed(i)** flag corresponding to that data bit. This **bit_deskewed (i)** flag will stay high until the **training_mode** flag is deasserted (00). Tables 1 and 2 below describe the conversion performed by the transition encoders 42.

**Table 1**

| Encode 0->1 | Encode 1->0 |
|---|---|
| 0000000001 ===> 1001 | 1111111110 ===> 1001 |
| 0000000011 ===> 1000 | 1111111100 ===> 1000 |
| 0000000111 ===> 0111 | 1111111000 ===> 0111 |
| 0000001111 ===> 0110 | 1111110000 ===> 0110 |
| 0000011111 ===> 0101 | 1111100000 ===> 0101 |
| 0000111111 ===> 0100 | 1111000000 ===> 0100 |
| 0001111111 ===> 0011 | 1110000000 ===> 0011 |
| 0011111111 ===> 0010 | 1100000000 ===> 0010 |
| 0111111111 ===> 0001 | 1000000000 ===> 0001 |
| 0111111111 ===> 0000 | 0000000000 ===> 0000 |
| 0000000001 ===> 1001 | 1111111111 ===> 1111 |

**Table 2**

| Encode 0->1 | Encode 1->0 |
|---|---|
| 0000000001 ===> 1001 | 1111111110 ===> 1001 |
| 000000001X ===> 1000 | 111111110X ===> 1000 |
| 00000001XX ===> 0111 | 11111110XX ===> 0111 |
| 0000001XXX ===> 0110 | 1111110XXX ===> 0110 |
| 000001XXXX ===> 0101 | 111110XXXX ===> 0101 |
| 00001XXXXX ===> 0100 | 11110XXXXX ===> 0100 |
| 0001XXXXXX ===> 0011 | 1110XXXXXX ===> 0011 |
| 001XXXXXXX ===> 0010 | 110XXXXXXX ===> 0010 |
| 01XXXXXXXX ===> 0001 | 10XXXXXXXX ===> 0001 |
| 1XXXXXXXXX ===> 0000 | 0XXXXXXXXX ===> 0000 |
| 0000000001 ===> 1001 | 1111111111 ===> 1111 |

X = dont'care
In these tables, the left values are the possible sampled values that are input during training sequences and the right values are the phases where the transition occurred. The only difference between Tables 1 and 2 is the fact that the first encode scheme is level triggered, while the second encode scheme is edge triggered.

The deskewing mechanism can be used to correct relative skew differences of +/- two cycles.

### Description of the alignment block 18 overall architecture

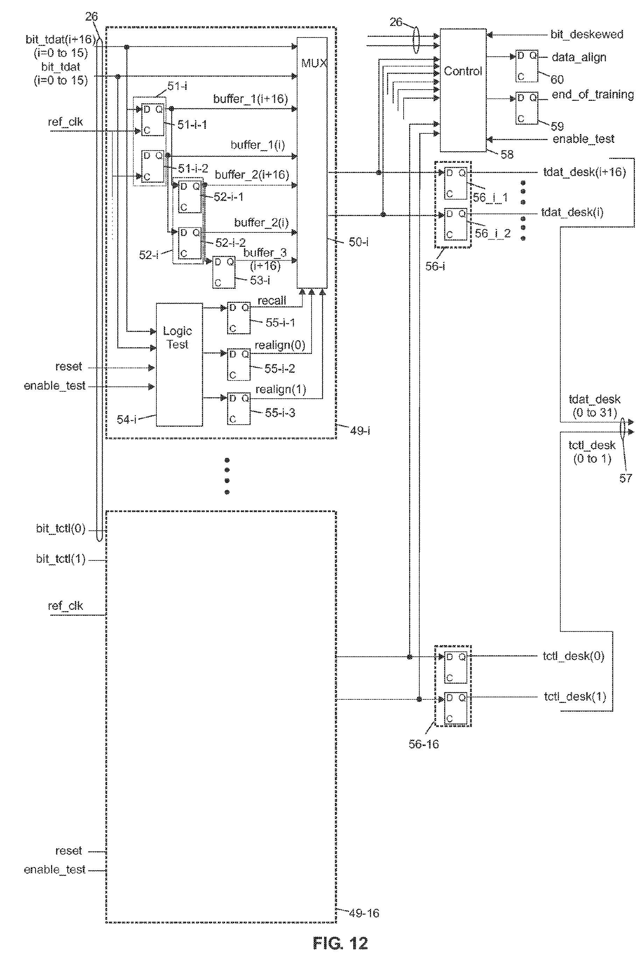

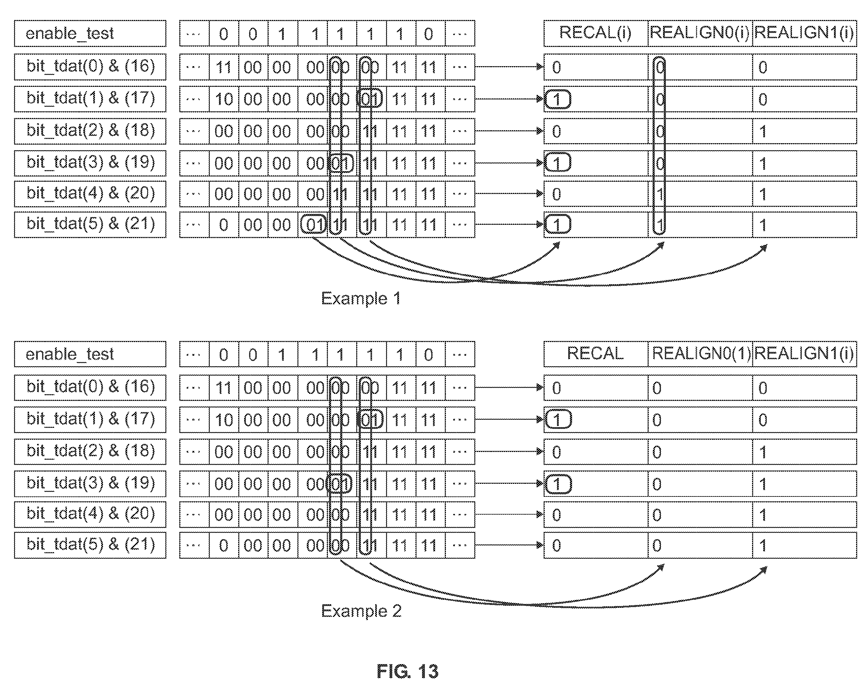

Alignment block 18 will be now described by reference to FIG. 12. Data and control bits output by the deskewing block 17, i.e. **bit_tdat (0 to 31)** and **bit_tctl (0 to 1) ,** are applied to a series of 17 aligners, each handling a couple of data bits, via bus 26. Turning to FIG. 12, data bits **bit_tdat(i+16)** and **bit_tdat(i)** belonging to two consecutive data bit patterns, wherein variable i still varies from 0 to 15, are applied to aligner 49-i. These data bits are directly applied to a multiplexor 50-i as inputs and also respectively applied to the data input D of a pair of flip-flops 51-i-1 and 51-i-2 (form sub-block 51-i) to be latched therein. These latched signals, labeled **buffer_1 (i+16)** and **buffer_1 (i),** are applied to said multiplexor 50-i as two other inputs and to the data input of another pair of flip-flops referenced 52-i-1 and 52-i-2 (form sub-block 52-i) that respectively generate signals **buffer_2(i+16)** and **buffer_2(i)**. In turn, these signals are applied to multiplexor 50-i as two further inputs. Finally, signal **buffer_2(i+16)** available at the output of flip-flop 52-i-1 is supplied to the data input of flip-flop 53-i which in turn generates a signal labeled **buffer_3(i+16) ,** applied to the multiplexor 50-i as a seventh input. Note that, the reference clock signal **ref_clk** is applied to the clock input C of all the flip-flops mentioned above (and by the way of all the flip-flops implemented in FIG. 12). As a result, seven signals are applied to multiplexor 50i, which thus requires to have three control signals. Still referring to FIG. 12, said data bits **bit_tdat(i+16)** and **bit_tdat(i)** are also applied to a logic test block 54-i which also receives the **enable_test** and **reset** signals. Logic test block 54-i generate the said three control signals, which once latched in flip-flops 55-i-1, 55-i-2 and 55-i-3, are labelled **recal(i), realign0(i)** and **realignl(i).** Logic test block 54-i basically consists of a combinatorial logic to perform logical functions that will be described by reference to FIG. 13. As apparent in FIG. 12, control signals **recal(i),** , **realign0(i)** and **realignl(i)** are applied to the control inputs of multiplexor 50-i which generates two aligned data bits, labeled **tdat_desk(i+16)** and **tdat_desk(i).** These signals which are preferably latched in respective flip-flops 56-i-1 and 56-i-2 (forming buffer 56-i) respectively correspond to data bits **bit_tdat(i+16)** and **bit_tdat(i).** Note that all the description related to data bits **bit_tdat(i)** and **bit_tdat(i+16)** is also applicable for **bit_tctl(0)** and **bit_tctl(1)** processed in aligner 49-16, because all aligners have the same construction. Aligned data bits, **tdat_desk(0)** to **tdat_desk(31)** and **tctl_desk(0)** to **tctl_desk(1)** output by buffers 56-0 to 56-16 are merged in a single double width bus 57 that transports 32 data bits and 2 control bits.

On the other hand, all the aligned data and control bits generated by aligners 49-0 to 49-16, before latching, are applied to a control block 58. Data bits **bit_tdat(i+16) , bit_tdat(i)** via bus 26 and the **bit_deskewed** signal are also applied to said control block 58. In turn, control block 58 generates three signals. A first signal, latched in flip-flop 59 is labeled **end_of_training,** the others are the **enable_test** and **data_align** signals mentioned above.

As long as the **bit_deskewed** signal is low, these three signals will remain low. When the **bit_deskewed** signal goes high, the **enable_test** signal detects transitions on the data and control bits sent on data bus 26. It is set to '1' when all these bits are equal to '0' and conversely set to '0' when they are equal to '1'. When the **enable_test** signal goes low, bits output by multiplexor 50- are checked and the **data_align** signal goes high if the bits are correctly aligned. The **end_of_training** signal will go high when said bits are no longer a training pattern.

Operation of the alignment block 18 can be understood in conjunction with the following description. At each rising edge of the reference clock **ref_clk,** there are two sets of data which are coming from the deskewing block 17, 16 data bits plus one control bit corresponding to the positive edge of the main clock **tdclk**, and 16 data bits plus one control bit corresponding to its negative edge. The role of deskewing block 17 is to align control/data bits on the reference clock **ref_clk** (but they remain misaligned with each other), while the role of the alignment block 18 is to realign said deskewed but misaligned control/data bits with the main clock **tdclk**. The FBATM level 4 and the SPI4 phase 2 standards specify that the training pattern can be used to compensate 1 bit time relative skew between two transmission lines. But the alignment mechanism implemented here has been designed to compensate a relative skew of +/- 2 bit times.

For a given bit, the training sequence is composed of 2 phases. During 10 cycles, the bits receive a first value, and then the opposite value during the next 10 cycles. For example: 11111111110000000000, then 00000000001111111111. Since the alignment block 18 receives two bits at the same time, only three configurations can be received during a given cycle, i.e. 00, 01, or 11.

XOR gates are used to find out where the transition has occurred, in or out of this couple of bits. This is done for every of the (16 + 1) couples of bits. If a transition is found inside one couple of bits, the **recal(i)** signal is set to '1' for this transmission line, otherwise its value is '0'. Two other signals labeled **realign0(i)** and **realign1(i)** point out that a transition has been detected between two successive couples of bits. This test takes two cycles maximum to operate.

The configuration shown in the first of the two examples depicted in FIG. 13 shows six possibilities for the choice of which couple of data bits is to be sent to output signals **tdat_desk(i)** and **tdat_desk (i+16).** Signal **recal(i)** is set to '1' (in latch 55-i-1) when the transition appears within a cycle. The two circled columns is exactly the information (latched in latches 55-i-2 and 55-i-3) representing **realign0(i)** and **realign1(i)** signals. The combination of these three signals is used to indicate the number of cycles between the first and the last transitions that occurred on the data bus 26.

The second example depicted in FIG. 13 describes the case when there is only one cycle of misalignment. In this case, only signal **realign1(i)** is modified while signal **realign0(i)** is let at '0'.

These examples illustrate the role of the **realign0(i), realign1(i)** and **recal(i)** control signals, i.e. to properly drive the multiplexor 50-i to select the appropriate data bits to be output among **bit_tdat(i)/bit_tdat(i+16), buffer_1(i)/buffer_1(i+16)** , **buffer_2(i)/buffer_2(i+16),** and **buffer_3(i+16).**

Indeed, when **realign0(i)** = **realign1(i) =** 0, the bits output by multiplexor 50-i are driven from data bits **bit_tdat(i)** and **bit_tdat(i+16).** Therefore, there is no delay at all. When **realign0(i)** = 0 and **realign1(i)** = 1, the bits output by multiplexor 50-i are driven from **buffer_1 (i)** and **buffer_1(i+16).** Therefore, there is now 1 cycle delay. Finally, when **realign0(i)** = **realign1(i)** = 1, the bits output by multiplexor 50-i are driven from **buffer_2(i)** and **buffer_2(i+16),** then causing a 2 cycle delay.

On top of that, the **realign0(i)** and **realign1(i) signals** select if the data bits that are output pertain to the same column, or to two different columns. When **recal(i)** = 0, the data bits output from the multiplexor 50-i are driven from one column. Either data bits **bit_tdat(i)/bit_tdat(i+16), buffer_1(i)/buffer_1(i+16),** or **buffer_2(i)/buffer_2(i+16)** are output depending on the **realign0(i)** and **realign1(i)** control signals. When **recal(i)** = 1, the data bits are driven from two columns. The first one, i.e. **bit_tdat(i+16)** is determined by **realign0(i)** and **realign1(i)** , while the second one, i.e. **bit_tdat(i)** is the next one. For instance, when **realign0(i)** = **realign1(i) =** 1, data bits are driven by **buffer_2(i+16)** and by **buffer_3(i) ,** so that there is a half cycle delay.

So, to summarize the behavior of the alignment block 18, on the first cycle, **realign1(i)** is modified and if a second realignment cycle is required, **realign1(i)** is copied to give **realign0(i)** and then modified with the new values. Not to disturb the data flow, the **recal** and **realign** signals are put in temporary buffers during computation and are taken into account only when the **enable_test** signal goes low.

### Conclusion

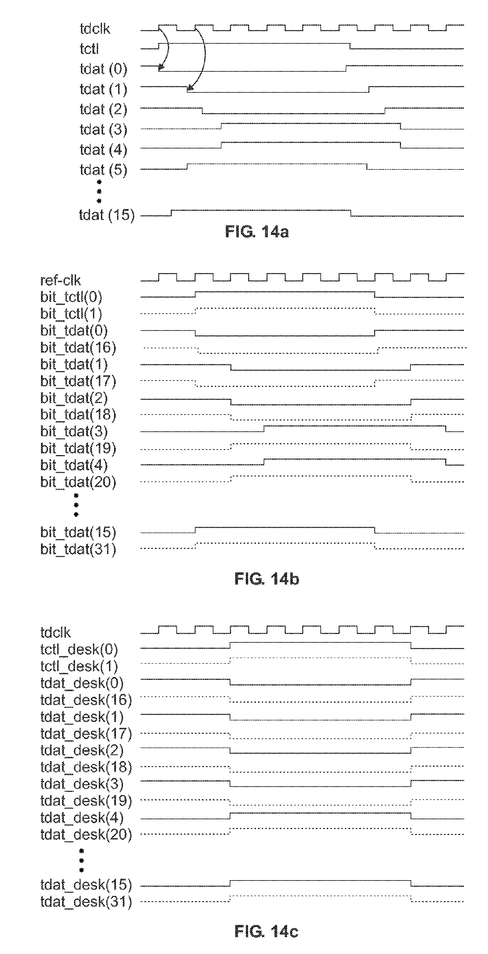

FIG. 14A shows the waveforms of the training patterns (control and data bits, main clock signal) that are received by the deskewing block 17 with skew (inter and intra cycle).

FIG. 14B shows the waveforms of the control and data bits after processing in the deskewing block 17 to illustrate the realignment of the control and data bits with a reference clock **(ref_clk)** that is internally generated.

FIG. 14C shows the waveforms of the control and data bits that are obtained after processing in the alignment block 18 to illustrate that said bits are now aligned on the original main clock signal **(tdclk)**.

In the present implementation, the deskewing/alignment mechanism can be used with a double edge clock running between 311 and 400 Mbits/s, which is equivalent to a 622 Mbits/s to 800 Mbits/s range.

It will be apparent to those skilled in the art that various modifications may be made in the process and products illustratively described therein, without departing from the spirit or scope of the invention as expressed in the following claims.

## Claims

1. An alignment cicuit (18) configured to receive a reference clock signal **(ref_clk)** derived from a main clock having a period T and successive sets of 2n data bits that are transmitted in parallel on a data bus (26) wherein said data bits are aligned with respect to said reference clock signal but misaligned with respect to each other; said alignment circuit comprising:
a plurality of n aligners (49-1 to 49-n), each aligner (49-i)
being coupled to said reference clock and a pair of said data
bits, referred to as primary bits, one data bit **(bit_tdat(i))**
having the rank (i) in a determined set and the other being the corresponding data bit **(bit_tdat(i+n))** having the rank (i+n) in the set, comprising:
first shifting means (51-i) for shifting said primary data bits to generate respective first and second data bits **(buffer_1(i)** & **buffer_1(i+n))** delayed of one cycle therefrom;
second shifting means (52-i) for shifting said first and second data bits to generate respective third and fourth data bits **(buffer_2(i)** & **buffer_2(i+n))** delayed of one cycle therefrom;
third shifting means (53-i) for shifting said fourth data bit to generate a fifth data bit **(buffer_3 (i+n))** delayed of one half-cycle therefrom;
multiplexing means (50-i) receiving said primary and delayed data bits under the control of three control signals of a first type **(recal(i)** , **realign0(i)** and **realign1(i)** ) to generate a pair of aligned data bits **(tdat_desk(i)** & **tdat_desk(i+n));**
so that said plurality of aligners generates 2n data bits **(tdat_desk(0)** to **tdat_desk(2n-1))** that are aligned with said main clock and with each other on a data bus (57); and,
a control block (58) coupled to said primary signals and to all pairs of said aligned data bits **(tdat_desk(0)** to **tdat_desk(2n-1))** that determines the end of the alignment operation and generates a control signal of a second type **(enable_test)** to that end.

2. The alignment circuit of claim 1 further comprising logic test means (54-i) in each aligner that is coupled to said pair of primary data bits and to said second control signal to generate said three control signals of a first type having the respective role of delaying these data bits strictly of one half (intra cycle), one and two cycles respectively when they are active.
